Europäisches Patentamt

European Patent Office

Office européen des brevets

(19)

(11) **EP 0 836 286 B1**

(12) **EUROPÄISCHE PATENTSCHRIFT**

(45) Veröffentlichungstag und Bekanntmachung des Hinweises auf die Patenterteilung:
**19.02.2003 Patentblatt 2003/08**

(51) Int Cl.⁷: **H04B 3/54**, H04L 25/02

(21) Anmeldenummer: **96115859.9**

(22) Anmeldetag: **02.10.1996**

(54) **Schaltungsanordnung zur Gewinnung einer Versorgungsspannung aus einer Busleitung**

Circuit arrangement for acquiring a supply voltage from a bus

Montage d'acquisition d'une tension d'alimentation depuis un bus

(84) Benannte Vertragsstaaten:
**CH DE FR LI**

(43) Veröffentlichungstag der Anmeldung:
**15.04.1998 Patentblatt 1998/16**

(73) Patentinhaber: **SIEMENS AKTIENGESELLSCHAFT 80333 München (DE)**

(72) Erfinder: **Zierhut, Hermann, Dipl.-Ing. 93073 Neutraubling (DE)**

(56) Entgegenhaltungen:
**EP-A- 0 448 881**          **WO-A-96/04735**
**DE-A- 4 424 907**          **FR-A- 2 596 596**

EP 0 836 286 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Schaltungsanordnung zur Gewinnung einer Versorgungsspannung aus einer Busleitung, auf der Nachrichtensignale einer Betriebsspannung überlagert sind, mit einer Konstantstromquelle und einem Weichenelement, das bei Auftreten von Nachrichtenimpulsen aufgesteuert wird.

Eine Schaltungsanordnung dieser Art ist aus der auf dieselbe Anmelderin und denselben Erfinder zurückgehenden DE 44 24 907 A1 bekannt. Eine Schaltungsanordnung mit den dort beschriebenen Merkmalen ist in der Praxis einsetzbar, so lange die aus der Busleitung entnommene Versorgungsleistung für andere Verbraucher gering ist und einige 100 mW nicht übersteigt. Ist die Leistungsabgabe jedoch höher, verringert sich der Wechselstromeingangswiderstand der als Betriebsspannungsquelle dienenden Schaltungsanordnung. Dies hat zur Folge, daß die ebenfalls auf der Busleitung übertragenen Nachrichtensignale, die üblicherweise als Nachrichtenbits mit einer Übertragungsfrequenz von beispielsweise 9,6 kHz vorliegen, gedämpft werden, so daß die Nachrichtenübermittlung über die Busleitung nicht mehr zuverlässig sichergestellt ist.

Der Erfindung liegt daher die Aufgabe zugrunde, eine Schaltungsanordnung der eingangs genannten Art zu schaffen, die auch bei hoher Leistungsabgabe aus der Busleitung eine sichere Übertragung der der Betriebsspannung überlagerten Nachrichtensignale auf der Busleitung gewährleistet.

Ausgehend von der eingangs genannten Schaltungsanordnung wird die gestellte Aufgabe erfindungsgemäß durch einen Schaltungsteil gelöst, der dem Weichenelement einen Steuerstrom im wesentlichen ohne Beeinflussung der Konstantstromquelle bereitstellt. Das erfindungsgemäße Merkmal stellt sicher, daß die Nachrichtenübertragung auf der Busleitung auch dann zuverlässig durchgeführt werden kann, und ohne Erhöhung der Sendeleistung der Teilnehmer auch dann möglich ist, wenn hohe Leistungen, beispielsweise 1W, für an der Busleitung angeschlossene Lasten oder Verbraucher benötigt werden.

Gemäß einer vorteilhaften Ausgestaltung der Erfindung wird die Konstantstromquelle von einem Steuerelement angesteuert.

Gemäß einer weiteren vorteilhaften Ausgestaltung der Erfindung weist der Schaltungsteil, der dem Weichenelement einen Steuerstrom bereitstellt, einen Widerstand, der in dem durch das Weichenelement gebildeten Stromzweig liegt, sowie einen Kondensator auf, der mit dem Steuereingang des Steuerelements verbunden ist. Diese Ausführungsform ist besonders einfach und kostengünstig.

Gemäß einer vorteilhaften alternativen Ausführungsform ist der Schaltungsteil eine Stromspiegelschaltung, wobei das Spiegelverhältnis der Stromspiegelschaltung vorzugsweise der reziproken Stromverstärkung des Weichenelements entspricht. Vorzugsweise ist dabei ein Ausgang der Stromspiegelschaltung mit einem Anschluß des Steuerelements verbunden.

Wenn das Weichenelement vorzugsweise in Form eines Transistors gebildet ist, besteht eine sehr vorteilhafte Ausführungsform der Erfindung darin, daß der Transistor des Weichenelements und der Transistor des Schaltungsteils als Darlington-Schaltung ausgebildet sind. Diese Ausführungsform ermöglicht in einfacher Weise eine Temperaturkompensation der Schaltung, die diese hinsichtlich der unterschiedlichen Temperaturkoeffizienten der einzelnen Schaltungsteile unabhängig läßt.

Eine besonders vorteilhafte Ausgestaltung der Erfindung besteht in der Verwendung einer Stromspiegelschaltung als Konstantstromquelle.

Eine vorteilhafte Ausführungsform der Erfindung besteht weiterhin in einer Regelverstärkerschaltung zur Ansteuerung des Steuerelements der Konstantstromquelle. Die geregelte bzw. gesteuerte Konstantstromquelle wird daher in Abhängigkeit von der Busspannung gesteuert und bildet auf diese Weise eine busspannungsabhängige Kurzschlußstrombegrenzung im Anlaufbereich. Dadurch wird ein Systemschwingen bei Spannungsausfall und beim Anlegen der Busspannung zuverlässig verhindert.

Der Regelverstärkungsschaltung wird vorzugsweise eine Referenzspannung durch eine Referenzspannungsquelle bereitgestellt. Vorteilhafterweise ist dabei eine Hilfsreferenzspannung, die porportional der Referenzspannnung der Referenzspannungsquelle ist, für die Kegelverstärkerschaltung vorgesehen. Vorteilhafterweise ist die Hilfsreferenzspannung dabei abhängig von der Spannung der Busleitung.

Gemäß einer weiteren vorteilhaften Ausführungsform der Erfindung ist ein Widerstand vorgesehen, der zwischen dem Eingang der Konstantstromquelle und dem Emitter eines als Steuerelement vorgesehenen npn-Transistors liegt. Dieser Widerstand, im folgenden auch als $R_{early}$-Widerstand bezeichnet, dient der Kompensation des sogenannten Early-Effekts, gemäß dem mit kleiner werdender Kollektorspannung der Kollektorstrom eines Transistors ebenfalls etwas kleiner wird.

Die Erfindung sowie weitere Ausführungsformen und Vorteile derselben wird bzw. werden anhand von Ausführungsbeispielen unter Bezugnahme auf die Figuren nachfolgend erläutert. Es zeigen:

Fig. 1    eine schematische Schaltungsanordnung gemäß einer ersten Ausführungsform der erfindungsgemäßen Schaltungsanordnung;

Fig. 2    ein Diagramm zur Darstellung der Signalverläufe während eines Nachrichtenimpulses auf dem Bus zur Erläuterung der Wirkungsweise der erfindungsgemäßen Schaltungsanordnung;

Fig. 3    eine weitere Ausführungsform der erfindungsgemäßen Schaltungsanordnung;

Fig. 4    eine dritte Ausführungsform der erfindungsgemäßen Schaltungsanordnung; und
Fig. 5    eine vierte Ausführungsform der erfindungsgemäßen Schaltungsanordnung.

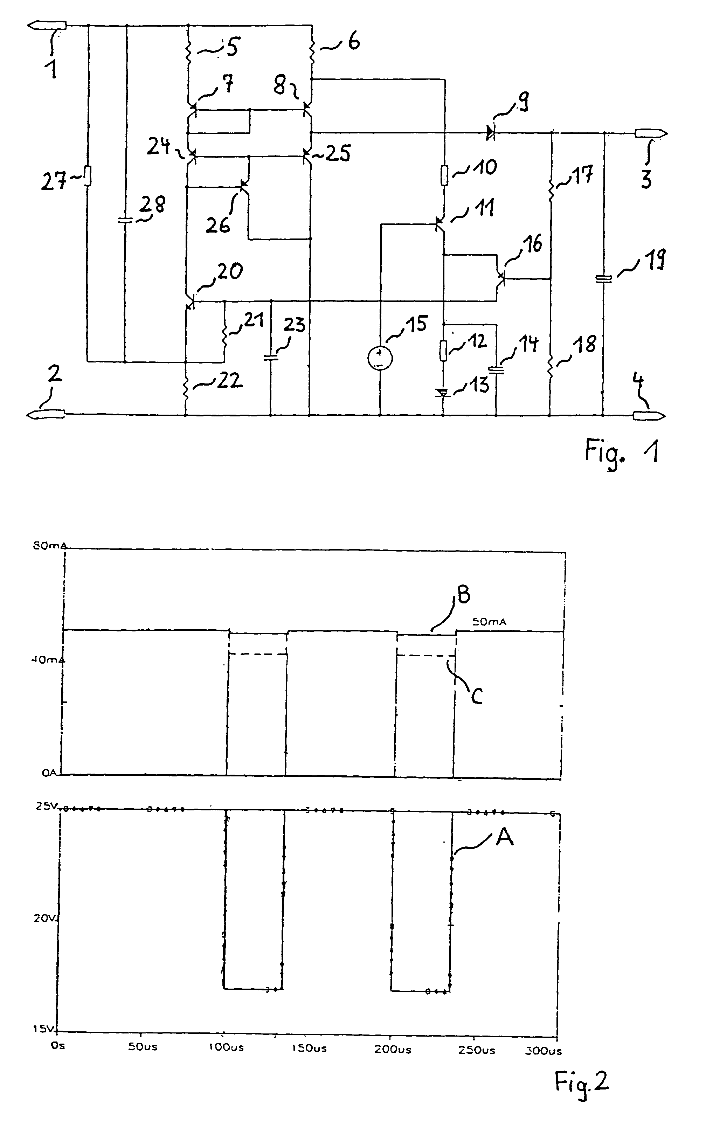

Bei der in Fig. 1 dargestellten Ausführungsform der Erfindung weist die Schaltungsanordnung die
Anschlüsse 1 und 2 als Eingänge zur Verbindung mit
der Busleitung auf. Die Anschlüsse 3 und 4 bilden die
Ausgänge der Schaltung zur Verbindung mit einem Verbraucher bzw. mit einer Last. Eingang 2 und Ausgang
4 liegen gemeinsam auf Masse. Der Anschluß 1 der
Schaltung ist über einen Widerstand 5 mit dem Emitter
eines Transistors 7 verbunden. Ebenso ist der Anschluß
1 der Schaltung über einen Widerstand 6 mit dem Emitter eines Transistors 8 verbunden. Die Basis von Transistor 7 ist mit seinem Kollektor zusammengeschaltet.
Der Kollektor des Transistors 8 ist über eine Diode 9 mit
dem Ausgangs-Anschluß 3 verbunden. Ein Widerstand
10 verbindet den Widerstand 6 mit dem Emitter eines
Transistors 11. Der Kollektor des Transistors 11 ist über
einen Widerstand 12 und eine Diode 13 mit Masse verbunden. Ein Kondensator 14 ist parallel zum Widerstand 12 und Diode 13 angeordnet. Die Basis des Transistors 11 ist mit einer Gleichspannungsquelle 15 verbunden. Ein Transistor 16 ist mit seinem Emitter mit dem
Kollektor des Transistors 11 verbunden. Ein Widerstand
17 ist mit dem Anschluß 3 verbunden und in Reihe mit
einem Widerstand 18 geschaltet, welcher am Anschluß
4 bzw. Masse liegt. Die Basis des Transistors 16 ist mit
den Widerständen 17 und 18 verbunden, während der
Kollektor des Transistors 16 auf die Basis eines Transistors 20 geschaltet ist. Die Basis des Transistors 20 ist
über einen Widerstand 21 mit dessen Emitter und über
einen Kondensator 23 mit Masse verbunden. Der Widerstand 21 sowie der Emitter des Transistors 20 sind
über einen weiteren Widerstand 22 ebenfalls mit Masse
verbunden. Der Kollektor des Transistors 20 ist mit dem
Kollektor eines Transistors 24 sowie der Basis eines
Transistors 26 verbunden. Die Basis des Transistors 24
ist mit dem Emitter des Transistors 26 sowie mit der Basis eines Transistors 25 verbunden. Die Emitter der
Transistoren 24 und 25 sind jeweils mit den Kollektoren
der Transistoren 7 und 8 verbunden. Die Kollektoren der
Transistoren 25 und 26 sind gemeinsam mit Masse verbunden. In der Schaltungsanordnung nach Fig. 1 sind
schließlich noch ein Widerstand 27 parallel zu einem
Kondensator 28 zwischen dem Anschluß 1 und dem
Emitter des Transistors 20 geschaltet.

In der in Fig. 1 gezeigten Ausführungsform der
Schaltungsanordnung wird in normalem Betrieb eine für
die Regelung der Ausgangsspannung benötigte Referenzspannung von der Gleichspannungsquelle 15 geliefert. Im Anlaufbereich wird aus der Busgleichspannung eine Hilfsreferenzspannung über einen Spannungsteiler gewonnen, der durch die Widerstände 6 und
10 einerseits und Widerstand 12 und Diode 13 andererseits gebildet wird. Die Diode 13 hat die Aufgabe, die Basis-Emitter-Spannung des Transistors 11 zu kompensieren. Mit steigender Busspannung erhöht sich somit proportional die am Kollektor des Transistors 11 zur
Verfügung stehende Hilfsreferenzspannung bis zu einem Sättigungswert, wenn die Bus-Spannung kleiner
als im Normalbetrieb ist. Dieser Sättigungswert wird im
normalen Arbeitsbereich eingehalten. Die Spannung
am Kollektor des Transistors 11 dient als Referenz für
den Regelverstärker, der durch den Transistor 16 gebildet wird. Die Spannung an der Basis des Transistors 16
wird über den Spannungsteiler, bestehend aus den Widerständen 17 und 18, eingestellt. Vorteilhaft bei dieser
Schaltung ist es, daß im hochgelaufenen Zustand am
Eingang des Regelverstärkers, also an der Basis des
Transistors 16 die Referenzspannung, welche an der
Basis von Transistor 11 anliegt, regelwirksam ansteht.
Besonders vorteilhaft ist es weiterhin, daß auf diese
Weise eine von der Buseingangsspannung abhängige
Kurzschlußstrombegrenzung realisiert werden kann.

Der als Regelverstärker arbeitende Transistor
16 steuert den Transistor 20 an, der seinerseits einen
Steuerstrom für die Transistoren 7, 8, 24, 25 und 26 liefert. Die Transistoren 7 und 8 stellen dabei einen Stromspiegel, wie er allgemein bekannt ist, dar. Die Transistoren 24 und 25 sind, wie bereits beschrieben, zu den
Transistoren 7 bzw. 8 in Reihe geschaltet.

Durch die erforderliche Ausgangsspannung
von z.B. 20 Volt fließt bei einem Aktivimpuls, d. h. bei
jedem eintreffenden Nachrichtenimpuls, bei dem die
Spannung unter 20 V plus der Diodenflußspannung absinkt, ein Strom durch den das Weichenoder Bypaßelement bildenden Transistor 25. Ein Laststrom, der über
die Diode 9 durch eine Last fließt, wird in diesem Fall
von dem Transistor 25 übernommen. Der Strom soll dabei in unverminderter Größe weiterfließen, damit der
Wechselstromeingangswiderstand der Schaltungsanordnung gegenüber dem Bus nicht klein wird und die
Sendeenergie der Teilnehmer nicht erhöht zu werden
braucht. Dazu ist es erforderlich, den Weichentransistor
25 mit einem entsprechenden Basisstrom zu versorgen,
ohne daß der Strom durch den Transistor 7 und folglich
durch den Transistor 8 des Haupt-Stromspiegels reduziert wird. Gemäß der bevorzugten Ausführungsform
nach Fig. 1 übernimmt diese Aufgabe der Versorgungstransistor 26, da im Moment der Stromübernahme durch
die Weiche bzw. den Bypaß die Transistoren 24, 25 und
26 eine einfache Stromquelle mit Verstärkung bilden.
Der Emitterstrom von Transistor 24 kann so in unverminderter Stärke weiterfließen, so daß das Spiegelverhältnis konstant bleibt.

In Fig. 2 ist der zeitliche Verlauf der eingangsseitigen Stromaufnahme der Schaltungsanordnung
beim Auftreten eines Aktivimpulses gezeigt. Im unteren
Teil der Fig. 2 bezeichnet A den Spannungsverlauf eines
solchen Aktivimpulses. Im oberen Teil der Fig. 2 ist die
Stromänderung während des Auftretens eines solchen
Aktivimpulses dargestellt. Dabei bezeichnet B den
Stromverlauf mit der erfindungsgemäßen Schaltungsanorndung, z. B. mit dem entsprechend der Ausführungsform nach Fig. 1 gezeigten Transistor 26. Demgegenüber zeigt die mit C bezeichnete, gestrichelte Linie den Stromverlauf ohne Verwendung der erfindungsgemäßen Schaltungsanordnung, also z. B. ohne den Transistor 26. Bei dem in Fig. 2 gezeigten Stromverlauf B in der in Fig. 1 dargestellten Ausführungsform errechnet sich der Wechselstromeingangswiderstand Re der Schaltung zu:

$$Re = \frac{\Delta U}{\Delta I} = \frac{8V}{51,4 \text{ mA} - 50,7 \text{ mA}} = 11,4 \text{ k}\Omega$$

Durch die geringere Stromänderung ergibt sich bereits ein sehr hoher Wert für Re. Die verbleibende Stromdifferenz ist auf den Early-Effekt des Steuertransistors 20 zurückzuführen. Sinkt die Kollektorspannung an einem Transistor, so wird gemäß dem Early-Effekt auch dessen Kollektorstrom etwas kleiner. Erfindungsgemäß ist daher in der Ausführungsform nach Fig. 1 ein Widerstand 27 vom Anschluß 1 zum Emitter des Transistors 20 geschaltet, um die Restwelligkeit der Stromaufnahme zu Null zu kompensieren. Bei sinkender Busspannung wird auch der Strom durch den Widerstand 27 kleiner, so daß der Strom durch den Transistor 20 etwas größer und somit die Stromabnahme durch den Early-Effekt kompensiert wird. In der in Fig. 1 dargestellten Ausführungsform ist für den Widerstand 27 ein Wert von 680 kΩ gewählt, wodurch sich ein Eingangswiderstand der Schaltungsanordnung von circa 100 kΩ ergibt.

Ein weiterer Vorteil der Schaltungsanordnung nach Fig. 1 ergibt sich durch die gewählte Schaltung von Transistor 20 und Widerstand 22. Der Emitterwiderstand 22 begrenzt den Steuerstrom für den Transistor 20, so daß sich bei einer kleineren Referenzspannung, d.h. der maximalen Spannung an der Basis des Transistors 20, auch ein kleinerer maximaler Strom bzw. Kurzschlußstrom ergibt.

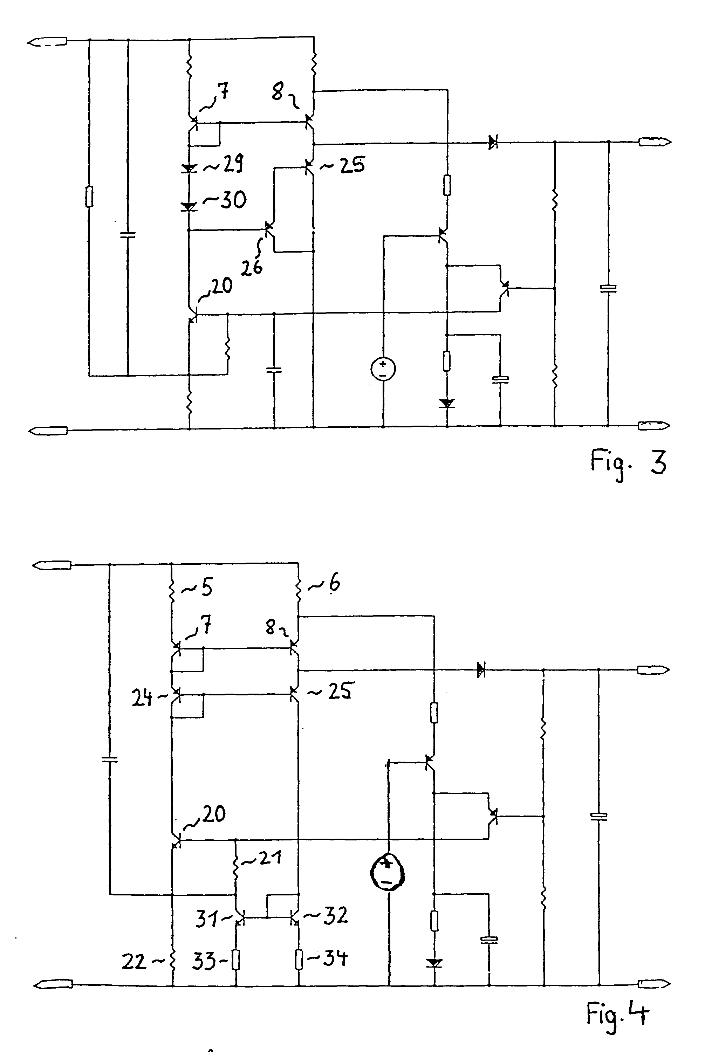

Bei der in Fig. 3 dargestellten Ausführungsform sind Schaltungsteile, die denen von Fig. 1 entsprechen, mit denselben Bezugszeichen versehen und werden nicht nochmals beschrieben. Das in Fig. 3 dargestellte Ausführungsbeispiel unterscheidet sich von dem der Fig. 1 lediglich darin, daß der Transistor 24 aus Fig. 1 durch zwei Dioden 29 und 30 ersetzt worden ist. Die Schaltung des Weichen- oder Bypaßtransistors 25 sowie des den Steuerstrom für den Transistor 25 bereitstellenden Transistors 26 ist als sogenannte Darlington-Stufe ausgeführt. Der Vorteil dieser Schaltung ist in der dadurch erreichten Temperaturkompensation zu sehen.

Bei der in Fig. 4 dargestellten Ausführungsform der Erfindung ist gegenüber der in Fig. 1 gezeigten Ausführungsform der Transistor 26 durch einen Stromspiegel, gebildet durch die Transistoren 31 und 32 sowie die Widerstände 33 und 34, ersetzt. Gegenüber der in Fig. 1 gezeigten Schaltung sind in Fig. 4 der Kondensator 23 sowie der Widerstand 27 nicht mehr vorhanden.

Die Widerstände 33 und 34 verbinden die Emitter der Transistoren 31 und 32 entsprechend mit Masse. Der Kollektor des Transistors 31 ist mit dem Emitter des Transistors 20 verbunden, und der Kollektor des Transistors 32 ist auf den Kollektor des Weichen- oder Bypaßtransistors 25 geschaltet. Durch die geeignete Wahl der Widerstände 33 und 34 ist das Spiegelverhältnis des Stromspiegels einstellbar. Gemäß der vorliegenden Ausführungsform der Erfindung werden die Widerstände 33 und 34 entsprechend den Werten der Widerstände 5 und 6 gewählt. Auf diese Weise entspricht das Spiegelverhältnis der Transistoren 32 und 31 der reziproken Stromverstärkung des Weichentransistors 25. Der über den Transistor 25 fließende Strom wirkt dadurch auf den Ausgangsstrom des Transistors 20 zurück.

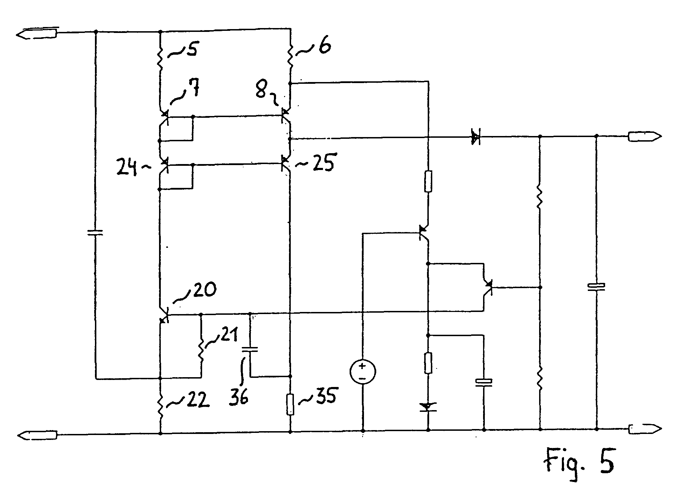

Eine weitere Ausführungsform der vorliegenden Erfindung ist in Fig. 5 dargestellt. Anstelle des Stromspiegels weist die Schaltungsanordnung nach Fig. 5 lediglich einen Widerstand 35 zwischen dem Kollektor des Transistors 25 und Masse sowie einen Kondensator 36 zwischen dem Kollektor des Transistors 25 und der Basis des Transistors 20 auf. Der Strom des Bypaßtransistors 25 verursacht am Widerstand 35 einen positiven Spannungsfall, der über den Kondensator 36 den Transistor 20 aufsteuert und so den erforderlichen zusätzlichen Steuerstrom für den Transistor 25 zur Verfügung stellt.

Die Erfindung wurde zuvor anhand bevorzugter Ausführungsbeispiele beschrieben.

**Patentansprüche**

1.  Schaltungsanordnung zur Gewinnung einer Versorgungsspannung aus einer Busleitung (1, 2), auf der Nachrichtensignale einer Betriebsspannung überlagert sind, mit einer Konstantstromquelle (7, 8) und einem Weichenelement (25), das bei Auftreten von Nachrichtenimpulsen aufgesteuert wird,
    **gekennzeichnet durch** einen Schaltungsteil, der dem Weichenelement (25) einen Steuerstrom ohne Beeinflussung der Konstantstromquelle (7, 8) bereitstellt.

2.  Schaltungsanordnung nach Anspruch 1,
    **dadurch gekennzeichnet,**
    **daß** die Konstantstromquelle (7, 8) von einem Steuerelement (20) angesteuert wird.

3.  Schaltungsanordnung nach Anspruch 1 oder 2,
    **dadurch gekennzeichnet,**
    **daß** der Schaltungsteil einen Widerstand (35), der in dem durch das Weichenelement (25) gebildeten Stromzweig liegt, sowie einen Kondensator (36) aufweist, der mit dem Steuereingang des Steuerelements (20) verbunden ist.

**4.** Schaltungsanordnung nach Anspruch 1 oder 2, **dadurch gekennzeichnet,** **daß** der Schaltungsteil eine Stromspiegelschaltung (31, 32, 33, 34) ist.

**5.** Schaltungsanordnung nach Anspruch 4, **dadurch gekennzeichnet,** **daß** ein Ausgang der Stromspiegelschaltung (31, 32) mit dem Steuereingang des Steuerelements (20) verbunden ist.

**6.** Schaltungsanordnung nach Anspruch 4 oder 5, **dadurch gekennzeichnet,** **daß** das Spiegelverhältnis der Stromspiegelschaltung (31, 32, 33, 34) der reziproken Stromverstärkung des Weichenelements (25) entspricht.

**7.** Schaltungsanordnung nach Anspruch 1, **dadurch gekennzeichnet,** **daß** der Schaltungsteil ein Transistor (26) und eine Diode (30) ist.

**8.** Schaltungsanordnung nach Anspruch 7, **dadurch gekennzeichnet,** **daß** der Transistor (25) das Weichenelement (25) ein Transistor ist, der mit dem Transistor (26) des Schaltungsteils eine Darlington-Schaltung bildet.

**9.** Schaltungsanordnung nach einem der vorhergehenden Ansprüche, **dadurch gekennzeichnet,** **daß** die Konstantstromquelle (7, 8) eine Stromspiegelschaltung ist.

**10.** Schaltungsanordnung nach einem der vorhergehenden Ansprüche, **gekennzeichnet durch** eine Kurzschlußstrom-Begrenzungsschaltung.

**11.** Schaltungsanordnung nach einem der vorhergehenden Ansprüche, **gekennzeichnet durch** eine Regelverstärkerschaltung (16) zur Ansteuerung des Steuerelements (20) der Konstantstromquelle (7, 8) im Anlaufbereich.

**12.** Schaltungsanordnung nach Anspruch 11, **gekennzeichnet durch** eine Referenzspannungsquelle (11), die der Regelverstärkungsschaltung (16) eine von der Referenzspannung abgeleitete Hilfsreferenzspannung bereitstellt.

**13.** Schaltungsanordnung nach Anspruch 12, **dadurch gekennzeichnet,** **daß** die Hilfsreferenzspannung im Anlaufbereich von der Busspannung abhängig ist.

**14.** Schaltungsanordnung nach einem der vorhergehenden Ansprüche, **gekennzeichnet durch** einen Widerstand (27), der zwischen dem Eingang der Konstantstromquelle (7, 8) und dem Emitter eines als Steuerelement (20) vorgesehenen npn-Transistors liegt.

**Claims**

**1.** Circuit arrangement for obtaining a supply voltage from a bus line (1, 2), on which communication signals of an operating voltage are superimposed, with a constant-current source (7, 8) and a switch element (25) which is turned on when communication pulses occur, **characterised by** a circuit section which provides the switch element (25) with a control current without affecting the constant-current source (7, 8).

**2.** Circuit arrangement according to Claim 1, **characterised in that** the constant-current source (7, 8) is activated by a control element (20).

**3.** Circuit arrangement according to Claim 1 or 2, **characterised in that** the circuit section has a resistor (35) located in the branch circuit formed by the switch element (25), and a capacitor (36) which is connected to the control input of the control element (20).

**4.** Circuit arrangement according to Claim 1 or 2, **characterised in that** the circuit section is a current mirror circuit (31, 32, 33, 34).

**5.** Circuit arrangement according to Claim 4, **characterised in that** an output of the current mirror circuit (31, 32) is connected to the control input of the control element (20).

**6.** Circuit arrangement according to Claim 4 or 5, **characterised in that** the mirror ratio of the current mirror circuit (31, 32, 33, 34) corresponds to the reciprocal current gain of the switch element (25).

**7.** Circuit arrangement according to Claim 1, **characterised in that** the circuit section is a transistor (26) and a diode (30).

**8.** Circuit arrangement according to Claim 7, **characterised in that** the switch element (25) is a transistor which with the transistor (26) of the circuit section forms a Darlington circuit.

**9.** Circuit arrangement according to one of the preceding claims, **characterised in that** the constant-current source (7, 8) is a current mirror circuit

**10.** Circuit arrangement according to one of the preceding claims, **characterised by** a short-circuit current limiting circuit.

**11.** Circuit arrangement according to one of the preceding claims, **characterised by** a control gain circuit (16) for activating the control element (20) of the constant-current source (7, 8) in the start-up region.

**12.** Circuit arrangement according to Claim 11, **characterised by** a reference voltage source (11) which provides the control gain circuit (16) with an auxiliary reference voltage derived from the reference voltage.

**13.** Circuit arrangement according to Claim 12, **characterised in that** the auxiliary reference voltage in the start-up region is conditional upon the bus voltage.

**14.** Circuit arrangement according to one of the preceding claims, **characterised by** a resistor (27) which is located between the input of the constant-current source (7, 8) and the emitter of an npn transistor provided as a control element (20).


**Revendications**

**1.** Circuit pour l'obtention d'une tension d'alimentation à partir d'une ligne de bus (1, 2), sur laquelle des signaux d'informations sont superposés à une tension de fonctionnement, comprenant une source de courant constant (7, 8) et un élément de dérivation (25) qui est commandé lors de l'apparition d'impulsions d'informations, **caractérisé par** une partie de circuit qui fournit à l'élément de dérivation (25) un courant de commande sans influencer la source de courant constant (7, 8).

**2.** Circuit selon la revendication 1, **caractérisé par le fait que** la source de courant constant (7, 8) est commandée par un élément de commande (20).

**3.** Circuit selon la revendication 1 ou 2, **caractérisé par le fait que** la partie de circuit comporte une résistance (35) qui se trouve dans la branche de courant formée par l'élément de dérivation (25) et un condensateur (36) qui est relié à l'entrée de commande de l'élément de commande (20).

**4.** Circuit selon la revendication 1 ou 2, **caractérisé par le fait que** la partie de circuit est un circuit miroir de courant (31, 32, 33, 34).

**5.** Circuit selon la revendication 4, **caractérisé par le fait qu'**une sortie du circuit miroir de courant (31, 32) est reliée à l'entrée de commande de l'élément de commande (20).

**6.** Circuit selon la revendication 4 ou 5, **caractérisé par le fait que** le rapport de miroir du circuit miroir de courant (31, 32, 33, 34) correspond au gain de courant réciproque de l'élément de dérivation (25).

**7.** Circuit selon la revendication 1, **caractérisé par le fait que** la partie de circuit est un transistor (26) et une diode (30).

**8.** Circuit selon la revendication 7, **caractérisé par le fait que** le transistor (25) de l'élément de dérivation (25) est un transistor qui forme avec le transistor (26) de la partie de circuit un montage de Darlington.

**9.** Circuit selon l'une des revendications précédentes, **caractérisé par le fait que** la source de courant constant (7, 8) est un circuit miroir de courant.

**10.** Circuit selon l'une des revendications précédentes, **caractérisé par** un circuit de limitation de courant de court-circuit.

**11.** Circuit selon l'une des revendications précédentes, **caractérisé par** un circuit amplificateur de régulation (16) pour la commande de l'élément de commande (20) de la source de courant constant (7, 8) dans la plage de démarrage.

**12.** Circuit selon la revendication 11, **caractérisé par** une source de tension de référence (11) qui fournit au circuit amplificateur de régulation (16) une tension de référence auxiliaire déduite de la tension de référence.

**13.** Circuit selon la revendication 12, **caractérisé par le fait que** la tension de référence auxiliaire dans la plage de démarrage dépend de la tension de bus.

**14.** Circuit selon l'une des revendications précédentes, **caractérisé par** une résistance (27) qui se trouve entre l'entrée de la source de courant constant (7, 8) et l'émetteur d'un transistor npn prévu comme élément de commande (20).

Fig. 1

Fig. 2

Fig. 3

Fig. 4

Fig. 5